Europäisches Patentamt

European Patent Office

Office européen des brevets

(11) Veröffentlichungsnummer: **0 254 113 B1**

# EUROPÄISCHE PATENTSCHRIFT

(45) Veröffentlichungstag der Patentschrift :
02.01.91 Patentblatt 91/01

(51) Int. Cl.⁵ : **B62D 11/08**

(21) Anmeldenummer : 87109700.2

(22) Anmeldetag : 06.07.87

(54) Hydraulische Lenkbremsanlage für Fahrzeuge.

(30) Priorität : 24.07.86 DE 3625025

(43) Veröffentlichungstag der Anmeldung :
27.01.88 Patentblatt 88/04

(45) Bekanntmachung des Hinweises auf die
Patenterteilung :
02.01.91 Patentblatt 91/01

(84) Benannte Vertragsstaaten :
DE FR GB IT

(56) Entgegenhaltungen :
DE-A- 3 240 746
FR-A- 2 597 055
PATENT ABSTRACTS OF JAPAN, Band 9, Nr.
294 (M-431)[2017], 20. November 1985; &
JP-A-60 131 375 (ISEKI NOKI K.K.) 13-07-1985

(73) Patentinhaber : LUCAS INDUSTRIES public
limited company
Great King Street
Birmingham, B19 2XF West Midlands (GB)

(72) Erfinder : Micke, Sigmar
Weidtmanstrasse 49
D-5400 Koblenz-Metternich (DE)
Erfinder : Pickenhahn, Josef
Friedrich-Ebert-Strasse 42
D-5472 Plaidt (DE)
Erfinder : Campbell, Roy
The Corner House 1 Marlbrook Lane
Licky Rock Bromsgrove Worcestershire (GB)

(74) Vertreter : Goetz, Rupert, Dipl.-Ing. et al
Wuesthoff & Wuesthoff Patent- und
Rechtsanwälte Schweigerstrasse 2
D-8000 München 90 (DE)

## Beschreibung

Die Erfindung betrifft ein hydraulische Lenkbremsanlage für Fahrzeuge, insbesondere landwirtschaftliche Schlepper, mit
- je einer Bremszylinderanordnung auf beiden Fahrzeugseiten,
- einer Hauptzylinderanordnung,
- einer Ventilanordnung, die in einem Normalzustand die Hauptzylinderanordnung mit den Bremszylinderanordnungen auf beiden Fahrzeugseiten verbindet, in vorwählbaren Sperrzuständen jedoch wahlweise die Bremszylinderanordnung auf einer oder der anderen Fahrzeugseite von der Hauptzylinderanordnung trennt, und
- einem Steuergerät, das die Ventilanordnung nach Eintritt einer vorbestimmten Bedingung in ihren Normalzustand zurückkehren läßt.

Bei einer bekannten Lenkbremsanlage dieser Gattung (DE-A-3 240 746) weist die Ventilanordnung ein kolbenartiges Ventilglied auf, das mittels eines hebelartigen Betätigungsgliedes verschiebbar ist. Im Normalzustand nehmen Ventilglied und Betätigungsglied je eine Mittelstellung ein und das Betätigungsglied ist mittels einer Rastvorrichtung festgehalten. Die Ventilanordnung hat ein Gehäuse mit zwei Einlässen, die an je eine Hauptzylinderkammer angeschlossen sind, und zwei Auslässen, die an Bremsen an je einer Seite eines Fahrzeugs angeschlossen sind. In der Mittelstellung des Ventilgliedes sind die beiden Auslässe mit den beiden Einlässen verbunden, sodaß bei Betätigung eines Bremspedals die Bremsen auf beiden Fahrzeugseiten betätigt werden. Wenn jedoch durch Bremsen eine Lenkvorgang unterstützt werden soll, beispielsweise wenn ein mit der bekannten Lenkbremsanlage ausgerüsteter Ackerschlepper beim Pflügen an einem Rand eines Ackers auf einem seiner Hinterräder gewendet werden soll, dann wird das Betätigungsglied, je nachdem ob eine Wendung nach rechts oder links vorgesehen ist, in eine rechte oder linke Endstellung geschwenkt, in der es einrastet. Dadurch wird das Ventilglied in eine Endstellung verschoben, in der es die Bremse oder Bremsen auf einer Fahrzeugseite mit der zugehörigen Hauptzylinderkammer verbindet läßt und die Bremsen auf der anderen Fahrzeugseite von der zugehörigen Hauptzylinderkammer trennt und diese mit einem Behälter für Hydraulikflüssigkeit verbindet. Infolgedessen findet die nächste Bremsung nur auf der vorgewählten Fahrzeugseite statt, um die das Fahrzeug drehen soll.

Um zu verhindern, daß nach einer Lenkbremsung bei der nächsten Bremsbetätigung unbeabsichtigt eine weitere Lenkbremsung stattfindet, hat die bekannte Lenkbremsanlage ein Steuergerät mit einem zusätzlichen Kolben, der bei jeder Lenkbremsung dem vollen Bremsdruck ausgesetzt ist und dabei gegen die Rückstellkraft einer Feder ein Formstück verschiebt, welches das Betätigungsglied aus seiner Rast löst, es aber daran hindert, in seine Mittelstellung zurückzukehren, solange der Bremsdruck wirksam ist. Auf diese Weise wird erreicht, daß die begonnene Lenkbremsung ungestört fortgesetzt werden kann, daß aber das Betätigungsglied in seine Mittelstellung zurückkehrt, sobald der Bremsdruck entfällt und der zusätzliche Kolben zusammen mit dem Formstück von der zugehörigen Feder in seine Ruhestellung rückgestellt wird. Die Bedingung, unter der dieses bekannte Steuergerät den Normalzustand wiederherstellt, damit die nächste Bremsung an allen angeschlossenen Rädern stattfindet, besteht also darin, daß die vorgewählte Lenkbremsung durchgeführt und das Bremspedal wieder freigegeben worden ist. Danach kann eine weitere Lenkbremsung nur dann stattfinden, wenn der Fahrer eine solche erneut vorgewählt hat, indem er den Betätigungshebel in der einen oder anderen seiner Endstellungen einrasten lassen hat. Somit bietet die bekannte Lenkbremsanlage normalerweise Gewähr dafür, daß eine Lenkbremsung nur dann stattfindet, wenn sie wirklich gewünscht wird.

Es kann indessen vorkommen, daß der Fahrer eines mit der bekannten Lenkbremsanlage ausgerüsteten Fahrzeugs, nachdem er eine Lenkbremsung vorgewählt hat, sich anders entscheidet, seine Fahrt ohne Bremsung fortsetzt und vergißt, die Vorwahl durch manuelles Rückstellen des Betätigungsgliedes rückgängig zu machen. Unter solchen Voraussetzungen besteht die Gefahr, daß die nächste Bremsung für den Fahrer überraschend als Lenkbremsung und möglicherweise unter Bedingungen stattfindet, unter denen eine Lenkbremsung höchst gefährlich sein kann. Beispielsweise kann das Fahrzeug auf einer Landstraße mit hoher Geschwindigkeit seine Fahrtrichtung ungewollt ändern und mit einem entgegenkommenden Fahrzeug zusammenstoßen.

Der Erfindung liegt deshalb die Aufgabe zugrunde, eine Lenkbremsanlage derart auszugestalten, daß das Risiko einer unter den gegebenen Umständen gefährlichen und für den Fahrer möglicherweise überraschenden Lenkwirkung der Bremsanlage weiter vermindert wird.

Die Aufgabe ist, ausgehend von einer hydraulischen Lenkbremsanlage der eingangs beschriebenen Gattung, erfindungsgemäß dadurch gelöst, daß
- das Steuergerät einen Eingang aufweist, der an einen Tachometer angeschlossen ist, und
- eine hinreichende Bedingung für die vom Steuergerät bewirkte Rückkehr der Ventilanordnung in den Normalzustand das Erreichen einer vorbestimmten Fahrzeuggeschwindigkeit ist.

Diese Lösung wird der Tatsache gerecht, daß Lenkbremsungen, besonders bei landwirtschaftlichen Fahrzeugen, nur bei verhältnismäßig geringen Fahrzeuggeschwindigkeiten notwendig und wünschenswert sind. Verläßt ein solches Fahrzeug einen Acker, den es bearbeitet hat, um auf einer Straße weiterzufahren, dann erreicht es normalerweise schon nach wenigen Metern eine höhere Geschwindigkeit, die das Steuergerät in der erfindungsgemäßen Weise wirksam werden läßt, sodaß die Ventilanordnung in ihren Normalzustand rückgestellt wird und infolgedessen Gewähr dafür besteht, daß die nächste Bremsung eine normale Bremsung mit allen angeschlossenen Bremsen ist. Das Steuergerät ist vorzugsweise so gestaltet, daß die Ventilanordnung in ihrer Normalstellung bleibt, wenn das Fahrzeug beim Vorwählen einer Lenkbremsung schon die vorbestimmte Geschwindigkeit erreicht hat.

Eine zweite Lösung der beschriebenen Aufgabe besteht, ebenfalls ausgehend von einer hydraulischen Lenkbremsanlage der eingangs beschriebenen Gattung darin, daß
– ein Eingang des Steuergeräts an ein Zeitglied angeschlossen ist und
– eine hinreichende Bedingung für die vom Steuergerät bewirkte Rückkehr der Ventilanordnung in den Normalzustand der Ablauf einer vorbestimmten Zeitspanne nach der Vorwahl eines der Sperrzustände ist.

Diese zweite Lösung setzt voraus, daß der Fahrer eines mit einer erfindungsgmäßen Lenkbremsanlage ausgerüsteten Fahrzeugs daran gewöhnt ist oder sich daran gewöhnen kann, eine vorgesehene Lenkbremsung jeweils erst kurz vor der Stelle vorzuwählen, an der sie stattfinden soll, beispielsweise einige Meter vor dem Rand eines Ackers, an dem der Ackerschlepper beim Pflügen gewendet werden soll. Zwischen der Vorwahl einer Lenkbremsung und deren Durchführung braucht deshalb nur eine kurze Zeitspanne in der Größenordnung von einigen Sekunden zu vergehen. In einer derart kurzen Zeitspanne ist es sehr unwahrscheinlich, daß der Fahrer seine Vorwahl für eine Lenkbremsung vergißt und sein Fahrzeug in eine Situation, beispielsweise Fahrt mit höherer Geschwindigkeit auf einer Straße, bringt, in der eine unerwartete Lenkwirkung einer Bremsung gefährlich wäre.

Eine dritte Lösung der beschriebenen Aufgabe besteht, wiederum ausgehend von einer hydraulischen Lenkbremsanlage der eingangs beschriebenen Gattung, darin, daß
– ein Eingang des Steuergeräts an eine Schaltung angeschlossen ist, die ein Schaltgetriebe des Fahrzeugs überwacht, und
– eine hinreichende Bedingung für die vom Steuergerät bewirkte Rückkehr der Ventilanordnung in den Normalzustand das Einlegen eines oberhalb eines bestimmten Ganges liegenden Ganges des Schaltgetriebes ist.

Dies bedeutet beispielsweise, daß der Fahrer eine Lenkbremsung vorwählen kann, wenn der erste oder zweite Gang des Schaltgetriebes eingelegt ist. Wenn der Fahrer jedoch einen höheren Gang einlegt, bewirkt das Steuergerät, daß die Ventilanordnung in ihren Normalzustand zurückkehrt, sodaß die nächste Bremsung eine normale Bremsung ist. Das Steuergerät ist vorzugsweise so gestaltet, daß die Ventilanordnung in ihrer Normalstellung bleibt, wenn beim Vorwählen einer Lenkbremsung schon ein oberhalb des bestimmten Ganges liegender Gang eingelegt ist.

Eine vierte Lösung der beschriebenen Aufgabe besteht, ebenfalls ausgehend von einer hydraulischen Lenkbremsanlage der eingangs beschriebenen Gattung, darin, daß
– ein Eingang des Steuergeräts an einen Querneigungsmesser im Fahrzeug angeschlossen ist und
– eine hinreichende Bedingung für die vom Steuergerät bewirkte Rückkehr der Ventilanordnung in den Normalzustand das Überschreiten einer bestimmten Schräglage des Fahrzeugs ist.

Dadurch lassen sich gefährliche Lenkbremsungen an einer Böschung oder einem Hang ausschließen. Das Steuergerät ist vorzugsweise so gestaltet, daß die Ventilanordnung in ihrer Normalstellung bleibt, wenn beim Vorwählen einer Lenkbremsung die vorbestimmte Schräglage des Fahrzeugs schon überschritten ist.

Eine fünfte Lösung der beschriebenen Aufgabe besteht, wiederum ausgehend von einer hydraulischen Lenkbremsanlage der eingangs beschriebenen Gattung, darin, daß
– ein Eingang des Steuergeräts an eine Schaltung zum Feststellen des Einschlags einer vom Fahrer mittels eines Steuerrades zu betätigenden Fahrzeuglenkung angeschlossen ist, und
– eine hinreichende Bedingung für die vom Steuergerät bewirkte Rückkehr der Ventilanordnung in den Normalzustand das Unterschreiten eines bestimmten Einschlags der Fahrzeuglenkung bei Beginn einer Bremsung ist.

Auch dies schließt normalerweise aus, daß der Fahrer von einer Lenkbremsung überrascht wird, die er entweder unbeabsichtigt eingestellt oder vergessen hat. Wenn der Fahrer nämlich eine Lenkbremsung beabsichtigt, ist damit zu rechnen, daß er die normale Fahrzeuglenkung beim Bremsen entsprechend einschlägt.

Eine sechste Lösung der beschriebenen Aufgabe besteht, ebenfalls ausgehend von einer hydraulischen Lenkbremsanlage der eingangs beschriebenen Gattung, darin, daß
– ein Eingang des Steuergeräts an einen Schalter angeschlossen ist, der das Einkuppeln eines Anhängefahrzeugs überwacht, und
– eine hinreichende Bedingung für die vom Steuergerät bewirkte Rückkehr der Ventilanordnung in den Normalzustand das Angekuppeltsein eines Anhängefahrzeugs ist.

Damit wird die Tatsache berücksichtigt, daß eine Lenkbremsung mit angekuppeltem Anhängefahrzeug in den meisten Fällen unzweckmäßig und in vielen Fällen sogar gefährlich ist und deshalb grundsätzlich vermieden werden sollte. Unter Anhängefahrzeuge sind in diesem Zusammenhang nicht Ackergeräte wie Pflüge, Eggen oder Heuwendemaschinen zu verstehen, mit denen Lenkbremsungen sinnvoll ausgeführt werden können, auch wenn sie Räder haben. Es ist deshalb zweckmäßig, wenn der Schalter, der das Ankuppeln eines Anhängefahrzeugs überwacht, mit dem eine Lenkbremsung ausgeschlossen sein soll, an einer Stelle angeordnet ist, an der er durch das Ankuppeln eines Ackergeräts nicht beeinflußt wird. Zweckmäßig ist beispielsweise die Anordnung eines solchen Schalters an einer Kupplung, an die Brems- oder Signalleitungen eines Anhängefahrzeugs angeschlossen werden.

Alle im vorstehenden beschriebenen erfindungsgemäßen Ausgestaltungen einer gattungsgmäßen Lenkbremsanlage können miteinander kombiniert werden. Außerdem ist es möglich, jede dieser Ausgestaltungen einzeln oder alle gemeinsam in Verbindung mit einem Steuergerät vorzusehen, das wie bei der beschriebenen bekannten Lenkbremsanlage die Ventilanordnung jeweils aus einem vorgewählten Sperrzustand in ihren Normalzustand zurückkehren läßt, wenn das Bremspedal betätigt und wieder freigegeben worden ist.

In jedem Fall ist es vorteilhaft, wenn zwischen einer Kammer der Hauptzylinderanordnung und je einem Hinterradbremszylinder auf je einer Fahrzeugseite je ein Elektromagnetventil angeordnet ist, das im Normalzustand offen ist und durch ein vom Steuergerät ausgehendes Signal schließbar ist.

Dabei ist es ferner vorteilhaft, wenn zwischen einer zweiten Kammer der Hauptzylinderanordnung und Vorderradbremszylindern auf beiden Fahrzeugseiten ein gemeinsames Elektromagnetventil angeordnet ist, das im Normalzustand offen ist und durch ein Signal schließbar ist, das vom Steuergerät zusammen mit jedem Signal abgegeben wird, welches für das eine oder andere der beiden den Hinterradbremszylindern zugeordneten Elektromagnetventile bestimmt ist.

Ein Ausführungsbeispiel der Erfindung wird im folgenden anhand eines Schaltschemas einer hydraulischen Lenkbremsanlage mit weiteren Einzelheiten erläutert.

Die dargestellte Lenkbremsanlage ist mittels eines einzigen Pedals 10 betätigbar, das über einen hydraulischen oder pneumatischen Bremskraftverstärker 12 auf eine Hauptzylinderanordnung 14 mit zwei voneinander getrennten Kammern 16 und 18 wirkt. Bremskraftverstärker 12 und Hauptzylinderanordnung 14 sind von bekannter Bauart und deshalb nicht erläuterungsbedürftig.

Die Kammer 16 ist einerseits über eine hydraulische Leitung 20 und ein Elektromagnetventil 22 mit einem rechten Hinterradbremszylinder 24 und andererseits über eine hydraulische Leitung 26 und ein Elektromagnetventil 28 mit einem linken Hinterradbremszylinder 30 verbunden. Die Kammer 18 ist über eine hydraulische Leitung 32 und ein Elektromagnetventil 34 entweder mit einem rechten und einem linken Vorderradbremszylinder 36 bzw. 38 verbunden oder mit einer Kardanwellenbremse 40, über die zwei angetriebene Vorderräder abbremsbar sind. An die Leitung 32 ist im dargestellten Beispiel außerdem eine Kupplung 42 für eine Anhängerbremsanlage angeschlossen.

Die drei Elektromagnetventile 22, 28 und 34 sind im Normalzustand offen, sodaß bei Betätigung des Pedals 10 sämtliche Bremsen, denen die Bremszylinder 24, 30, 36 und 38 zugeordnet sind, gemeinsam betätigt werden. Um Lenkbremsungen zu ermöglichen, läßt sich jedoch erreichen, daß bei einer Betätigung des Pedals 10 nur entweder der rechte Hinterradbremszylinder 24 oder nur der linke Hinterradbremszylinder 30 unter Druck gesetzt wird, je nachdem ob eine Richtungsänderung nach rechts oder nach links gewünscht wird. Hierzu ist ein Steuergerät 44 vorgesehen.

Das Steuergerät 44 hat zwei Eingänge, die an einen Tachometer 46 bzw. ein Zeitglied 48 angeschlossen sind. An einen dritten Eingang des Steuergeräts 44 ist eine Schaltung 50 angeschlossen, die ein Schaltgetriebe des Fahrzeugs überwacht und ein Signal abgibt, wenn einer der höheren Gänge, beispielsweise ein Gang oberhalb des zweiten, eingelegt ist. An einen vierten Eingang des Steuergeräts 44 ist ein Querneigungsmesser 52 angeschlossen, der ein Signal abgibt, wenn das Fahrzeug einen vorbestimmten Neigungswinkel nach einer oder der anderen Seite überschreitet. An einen fünften Eingang des Steuergeräts 44 ist eine Schaltung 54 angeschlossen, die ein Signal abgibt, wenn die mittels eines Lenkrades zu betätigende Fahrzeuglenkung auf Geradeausfahrt oder geringen Lenkeinschlag nach rechts oder links eingestellt ist. An einen sechsten Eingang des Steuergeräts 44 ist ein Schalter 56 angeschlossen, der ein Signal abgibt, wenn ein Anhängefahrzeug an die Kupplung 42 angeschlossen ist.

Das Steuergerät hat ferner drei Ausgänge, die an je eines der Elektromagnetventile 22, 28 und 34 angeschlossen sind. All diese Ein- und Ausgänge sind in grundsätzlich beliebiger Art geeignet, hydraulische, pneumatische, elektrische oder elektronische Signale zu übermitteln. Vorzugsweise sind die Eingänge für elektronische Signale vorgesehen, während die Ausgänge zum Abgeben eines elektrischen Stromes ausgebildet sind, von dem wahlweise das Elektromagnetventil 22 oder das Elektromagnetventil 28 geschlossen wird und zusätzlich immer dann, wenn eines dieser Ventile 22 oder 28 geschlossen ist, auch das Elektromagnetventil 34 geschlossen wird.

Für die Festlegung, ob sämtliche Ventile 22, 28 und 34 in ihrem Normalzustand, also offen, bleiben sollen oder das eine oder andere der Elektromagnetventile 22 oder 28 zusammen mit dem Elektromagnetventil 34 geschlossen werden soll, ist dem Steuergerät 44 ein Vorwählhebel 58 zugeordnet, der vom Fahrer betätigbar ist.

Der Vorwählhebel 58 steht normalerweise in einer Mittelstellung, in der die Elektromagnetventile 22, 28 und 34 offen sind, sodaß die nächste Bremsung mit allen Radbremszylindern 24, 30, 36 und 38 durchgeführt wird. Wenn der Fahrer jedoch den Vorwählhebel 58 nach rechts stellt, werden die Elektromagnetventile 28 und 34 geschlossen, sodaß bei einer dann einsetzenden Bremsung nur der rechte Hinterradbremszylinder 24 betätigt wird. Umgekehrt wird nur der linke Hinterradbremszylinder 30 betätigt, wenn der Fahrer den Vorwählhebel 58 nach links gestellt und dadurch die Elektromagnetventile 22 und 34 geschlossen hat. Auf diese Weise ist dafür gesorgt, daß je nach Stellung des Vorwählhebels 58 bei der nächsten Betätigung des Bremspedals 10 eine Lenkbremsung mit Drehung des Fahrzeugs nach rechts bzw. nach links stattfindet, sofern nicht vor dieser nächsten Bremsung eine der folgenden Bedingungen eintritt:

a) Wenn in dem Augenblick, in dem der Vorwählhebel 58 auf Lenkbremsen in der einen oder anderen Richtung gestellt wird, oder irgendwann danach das Fahrzeug eine bestimmte Geschwindigkeit von beispielsweise 10 km/h überschreitet, sorgt ein vom Tachometer 46 abgegebenes Signal dafür, daß der Vorwählhebel 58 sofort automatisch in seine Normalstellung zurückkehrt, sodaß der Normalzustand, also die Offenstellung sämtlicher Elektromagnetventile 22, 28 und 34 wiederhergestellt wird.

b) Wenn nach dem Augenblick, in dem der Vorwählhebel 58 auf Lenkbremsen in der einen oder anderen Richtung eingestellt worden ist, eine bestimmte Zeitspanne von beispielsweise 10 s verstrichen ist, gibt das Zeitglied 48 ein Signal an das Steuergerät 44, das den Vorwählhebel 58 in seine Normalstellung zurückkehren läßt.

c) Wenn der dritte oder ein höherer Gang des Schaltgetriebes eingelegt wird oder beim Vorwählen einer Lenkbremsung schon eingelegt ist, gibt die Schaltung 50 ein Signal ab, das den Vorwählhebel rückstellt.

d) Wenn das Fahrzeug eine bestimmte Querneigung überschreitet, gibt der Querneigungsmesser 52 ein Signal ab, das den Vorwählhebel 58 rückstellt.

e) Wenn beim Betätigen der Bremse die Lenkung des Fahrzeugs auf Geradeauslauf oder geringen Lenkeinschlag eingestellt bleibt, muß angenommen werden, daß der Fahrer eine zuvor gewählte Lenkbremsung nicht mehr beabsichtigt. Deshalb gibt die Schaltung 54 ein Signal ab, das den Vorwählhebel 58 rückstellt, sodaß die Bremsung also normale (Allrad-) Bremsung durchgeführt wird.

f) Eine Vorwahl für Lenkbremsung wird ebenfalls rückgängig gemacht, wenn im Zeitpunkt der Vorwahl oder danach ein Anhänger angekuppelt ist oder wird. In diesem Fall sorgt ein vom Schalter 56 abgegebenes Signal dafür, daß der Vorwählhebel rückgestellt wird.

g) Der Vorwählhebel 58 kehrt auch dann in seine Normalstellung zurück, wenn der Fahrer das Pedal 10 nach einer Lenkbremsung wieder freigibt.

Anstelle des Vorwählhebels 58 kann das Steuergerät 44 andere Vorwählmittel aufweisen, beispielsweise je eine Drucktaste für rechtsdrehende und für linksdrehende Lenkbremsung. Dabei läßt sich, falls dies wünschenswert erscheint, mit üblichen schaltungstechnischen Maßnahmen verhindern, daß der Fahrer durch fortgesetztes Betätigen der einen oder anderen Drucktaste eine Lenkbremsung bei einer Fahrzeuggeschwindigkeit erzwingt, wenn eine der erwähnten Bedingungen eingetreten ist, unter denen eine Lenkbremsung nicht stattfinden soll.

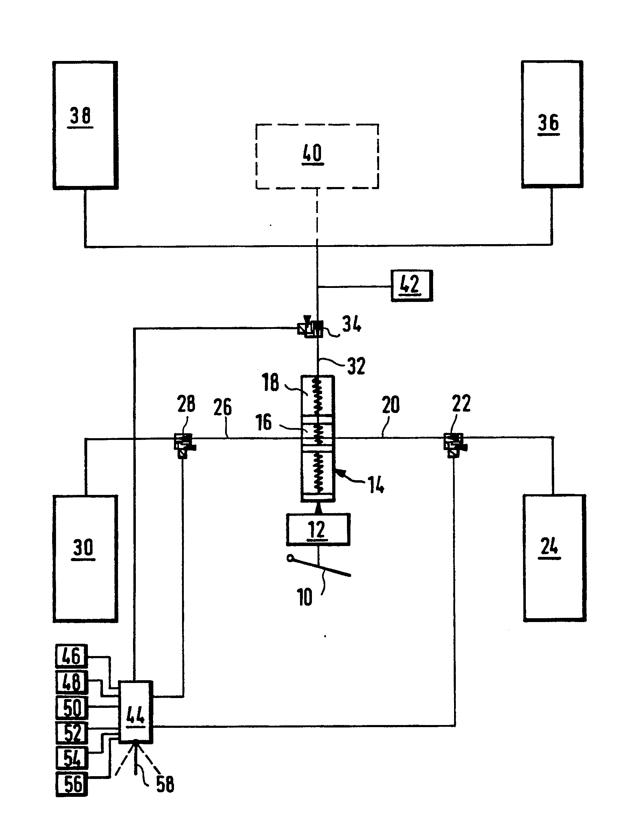

## Ansprüche

1. Hydraulische Lenkbremsanlage für Fahrzeuge, insbesondere landwirtschaftliche Schlepper, mit

– je einer Bremszylinderanordnung (24, 36 ; 30, 38) auf beiden Fahrzeugseiten,

– einer Hauptzylinderanordnung (14),

– einer Ventilanordnung (22, 28, 34), die in einem Normalzustand die Hauptzylinderanordnung (14) mit den Bremszylinderanordnungen (24, 36 ; 30, 38) auf beiden Fahrzeugseiten verbindet, in vorwählbaren Sperrzuständen jedoch wahlweise die Bremszylinderanordung (24, 36 oder 30, 38) auf einer oder der anderen Fahrzeugseite von der Hauptzylinderanordnung (14) trennt, und

– einem Steuergerät (44), das die Ventilanordnung (22, 28, 34) nach Eintritt einer vorbestimmten Bedingung in ihren Normalzustand zurückkehren läßt, dadurch **gekennzeichnet,** daß

- ein Eingang des Steuergeräts (44) an einen Tachometer (46) angeschlossen ist, und

- eine hinreichende Bedingung für die vom Steuergerät (44) bewirkte Rückkehr der Ventilanordnung (22, 28, 34) in den Normalzustand das Erreichen einer vorbestimmten Fahrzeuggeschwindigkeit ist.

2. Hydraulische Lenkbremsanlage für Fahrzeuge, insbesondere landwirtschaftliche Schlepper, mit

– je einer Bremszylinderanordnung (24, 36 ; 30, 38) auf beiden Fahrzeugseiten,

– einer Hauptzylinderanordnung (14),

– einer Ventilanordung (22, 28, 34), die in einem Normalzustand die Hauptzylinderanordnung (14) mit den Bremszylinderanordnungen (24, 36 ; 30, 38) auf beiden Fahrzeugseiten verbindet, in vorwählbaren Sperrzuständen jedoch wahlweise die Bremszylinderanordung (24, 36 oder 30, 38) auf einer oder der anderen Fahrzeugseite von der Hauptzylinderanordnung (14) trennt, und

– einem Steuergerät (44), das die Ventilanordnung (22, 28, 34) nach Eintritt einer vorbestimmten Bedingung in ihren Normalzustand zurückkehren läßt, dadurch **gekennzeichnet,** daß

– ein Eingang des Steuergeräts (44) an ein Zeitglied (48) angeschlossen ist und

– eine hinreichende Bedingung für die vom Steuergerät (44) bewirkte Rückkehr der Ventilanordnung (22, 28, 34) in den Normalzustand der Ablauf einer vorbestimmten Zeitspanne nach der Vorwahl eines der Sperrzustände ist.

3. Hydraulische Lenkbremsanlage für Fahrzeuge, insbesondere landwirtschaftliche Schlepper, mit

– je einer Bremszylinderanordnung (24, 36 ; 30, 38) auf beiden Fahrzeugseiten,

– einer Hauptzylinderanordnung (14),

– einer Ventilanordnung (22, 28, 34), die in einem Normalzustand die Hauptzylinderanordnung (14) mit den Bremszylinderanordnungen (24, 36 ; 30, 38) auf beiden Fahrzeugseiten verbindet, in vorwählbaren Sperrzuständen jedoch wahlweise die Bremszylinderanordnung (24, 36 oder 30, 38) auf einer oder der anderen Fahrzeugseite von der Hauptzylinderanordnung (14) trennt, und

– einem Steuergerät (44) das die Ventilanordnung (22, 28, 34) nach Eintritt einer vorbestimmten Bedingung in ihren Normalzustand zurückkehren läßt, dadurch **gekennzeichnet,** daß

– ein Eingang des Steuergeräts (44) an eine Schaltung (50) angeschlossen ist, die ein Schaltgetriebe des Fahrzeugs überwacht, und

– eine hinreichende Bedingung für die vom Steuergerät (44) bewirkte Rückkehr der Ventilanordnung (22, 28, 34) in den Normalzustand das Einlegen eines oberhalb eines bestimmten Ganges liegenden Ganges des Schaltgetriebes ist.

4. Hydraulische Lenkbremsanlage für Fahrzeuge, insbesondere landwirtschaftliche Schlepper, mit

– je einer Bremszylinderanordnung (24, 36 ; 30, 38) auf beiden Fahrzeugseiten,

– einer Hauptzylinderanordnung (14),

– einer Ventilanordnung (22, 28, 34), die in einem Normalzustand die Hauptzylinderanordnung (14) mit den Bremszylinderanordnungen (24, 36 ; 30, 38) auf beiden Fahrzeugseiten verbindet, in vorwählbaren Sperrzuständen jedoch wahlweise die Bremszylinderanordnung (24, 36 oder 30, 38) auf einer oder der anderen Fahrzeugseite von der Hauptzylinderanordnung (14) trennt, und

– einem Steuergerät (44), das die Ventilanordnung (22, 28, 34) nach Eintritt einer vorbestimmten Bedingung in ihren Normalzustand zurückkehren läßt, dadurch **gekennzeichnet,** daß

– ein Eingang des Steuergeräts (44) an einem Querneigungsmesser (52) im Fahrzeug angeschlossen ist, und

– eine hinreichende Bedingung für die vom Steuergerät (44) bewirkte Rückkehr der Ventilanordnung (22, 28, 34) in den Normalzustand das Überschreiten einer bestimmten Schräglage des Fahrzeugs ist.

5. Hydraulische Lenkbremsanlage für Fahrzeuge, insbesondere landwirtschaftliche Schlepper, mit

– je einer Bremszylinderanordnung (24, 36 ; 30, 38) auf beiden Fahrzeugseiten,

– einer Hauptzylinderanordnung (14),

– einer Ventilanordnung (22, 28, 34), die in einem Normalzustand die Hauptzylinderanordnung (14) mit den Bremszylinderanordnungen (24, 36 ; 30, 38) auf beiden Fahrzeugseiten verbindet, in vorwählbaren Sperrzuständen jedoch wahlweise die Bremszylinderanordnung (24, 36 oder 30, 38) auf einer oder der anderen Fahrzeugseite von der Hauptzylinderanordnung (14) trennt, und

– einem Steuergerät (44), das die Ventilanordnung (22, 28, 34) nach Eintritt einer vorbestimmten Bedingung in ihren Normalzustand zurückkehren läßt, dadurch **gekennzeichnet,** daß

– ein Eingang des Steuergeräts (44) an eine Schaltung (54) zum Feststellen des Einschlags einer vom Fahrer mittels eines Steuerades zu betätigenden Fahrzeuglenkung angeschlossen ist, und

– eine hinreichende Bedingung für die vom Steuergerät (44) bewirkte Rückkehr der Ventilanordnung (22, 28, 34) in den Normalzustand das Unterschreiten eines bestimmten Einschlags der Fahrzeuglenkung bei Beginn einer Bremsung ist.

6. Hydraulische Lenkbremsanlage für Fahrzeuge, insbesondere landwirtschaftliche Schlepper, mit

– je einer Bremszylinderanordnung (24, 36 ; 30, 38) auf beiden Fahrzeugseiten,

– einer Hauptzylinderanordnung (14),

– einer Ventilanordnung (22, 28, 34), die in einem Normalzustand die Hauptzylinderanordnung (34) mit den Bremszylinderanordnungen (24, 36 ; 30, 38) auf beiden Fahrzeugseiten verbindet, in vorwählbaren Sperrzuständen jedoch wahlweise die Bremszylinderanordnung (24, 36 oder 30, 38) auf einer oder der anderen Fahrzeugseite von der Hauptzylinderanordnung (14) trennt, und

– einem Steuergerät (44), das die Ventilanordnung (22, 28, 34) nach Eintritt einer vorbestimmten Bedingung in ihren Normalzustand zurückkehren läßt, dadurch **gekennzeichnet,** daß

– ein Eingang des Steuergeräts (44) an einen Schalter (56) angeschlossen ist, der das Einkuppeln eines Anhängefahrzeugs überwacht, und

– eine hinreichende Bedingung für die vom Steuergerät (44) bewirkte Rückkehr der Ventilanordnung (22, 28, 34) in den Normalzustand das Angekuppeltsein eines Anhängefahrzeugs ist.

7. Lenkbremsanlage nach einem der Ansprüche 1 bis 6,
dadurch **gekennzeichnet,** daß zwischen einer Kammer (16) der Hauptzylinderanordnung (14) und je einem Hinterradbremszylinder (24 ; 30) auf je einer Fahrzeugseite je ein Elektromagnetventil (22 ; 28) angeordnet ist, das im Normalzustand offen ist und durch ein vom Steuergerät (44) ausgehendes Signal schließbar ist.

8. Lenkbremsanlage nach Anspruch 7,
dadurch **gekennzeichnet,** daß zwischen einer zweiten Kammer (18) der Hauptzylinderanordnung (14) und Vorderradbremszylindern (36 ; 38) auf beiden Fahrzeugseiten ein gemeinsames Elektromagnetventil (34) angeordnet ist, das im Normalzustand offen ist und durch ein Signal schließbar ist, das vom Steuergerät (44) zusammen mit jedem Signal abgegeben wird, welches für das eine oder andere der beiden den Hinterradbremszylindern (24 ; 30) zugeordneten Elektromagnetventile (22 ; 28) bestimmt ist.

## Claims

1. An hydraulic steering-braking system for vehicles, especially tractors for use in agriculture, comprising
– brake cylinder arrangements (24, 36 ; 30, 38), one at each side of the vehicle,
– a master cylinder arrangement (14),
– a valve arrangement (22, 28, 34) for connecting the master cylinder arrangement (14) to the brake cylinder arrangements (24, 36 ; 30, 38) at both sides of the vehicle in a normal condition and for selectively disconnecting the brake cylinder arrangement (24, 36 or 30, 38) at either side of the vehicle from the master cylinder arrangement (14) in preselectable blocking conditions, and
– a control device (44) which causes the valve arrangement (22, 28, 34) to return to the normal condition when a predetermined condition has been established,
characterized in that
– an input of the control device (44) is connected to a speedometer (46), and
– a sufficient condition for return of the valve arrangement (22, 28, 34) into the normal condition caused by the control device (44) is the reaching of a predetermined vehicle speed.

2. An hydraulic steering-braking system for vehicles, especially tractors for use in agriculture, comprising
– brake cylinder arrangements (24, 36 ; 30, 38), one at each side of the vehicle,
– a master cylinder arrangement (14),
– a valve arrangement (22, 28, 34) for connecting the master cylinder arrangement (14) to the brake cylinder arrangements (24, 36 ; 30, 38) at both sides of the vehicle in a normal condition and for selectively disconnecting the brake cylinder arrangement (24, 36 or 30, 38) at either side of the vehicle from the master cylinder arrangement (14) in preselectable blocking conditions, and
– a control device (44) which causes the valve arrangement (22, 28, 34) to return to the normal condition when a predetermined condition has been established,
characterized in that
– an input of the control device (44) is connected to a timer (48), and
– a sufficient condition for return of the valve arrangement (22, 28, 34) into the normal condition caused by the control device (44) is the expiration of a predetermined period of time upon preselection of one of the blocking conditions.

3. An hydraulic steering-braking system for vehicles, especially tractors for use in agriculture, comprising
– brake cylinder arrangements (24, 36 ; 30, 38), one at each side of the vehicle,
– a master cylinder arrangement (14),
– a valve arrangement (22, 28, 34) for connecting the master cylinder arrangement (14) to the brake cylinder arrangements (24, 36 ; 30, 38) at both sides of the vehicle in a normal condition and for selectively disconnecting the brake cylinder arrangement (24, 36 or 30, 38) at either side of the vehicle from the master cylinder arrangement (14) in preselectable blocking conditions, and
– a control device (44) which causes the valve arrangement (22, 28, 34) to return to the normal condition when a predetermined condition has been established, characterized in that
– an input of the control device (44) is connected to a circuit (50) which monitors a change-speed gear of the vehicle, and
– a sufficient condition for return of the valve arrangement (22, 28, 34) into the normal condition caused by the control device (44) is the shifting to a higher gear than a certain gear of the change-speed gear.

4. An hydraulic steering-braking system for vehicles, especially tractors for use in agriculture, comprising
– brake cylinder arrangements (24, 36 ; 30, 38), one at each side of the vehicle,
– a master cylinder arrangement (14),
– a valve arrangement (22, 28, 34) for connecting the master cylinder arrangement (14) to the brake cylinder arrangements (24, 36 ; 30, 38) at both sides of the vehicle in a normal condition and for selectively disconnecting the brake cylinder arrangement (24, 36 or 30, 38) at either side of the vehicle from the master cylinder arrangement (14) in preselectable blocking conditions, and
– a control device (44) which causes the valve arrangement (22, 28, 34) to return to the normal condition when a predetermined condition has been established, characterized in that
– an input of the control device (44) is connected to a cross-inclination pickup (52) in the vehicle, and
– a sufficient condition for return of the valve arrangement (22, 28, 34) into the normal condition caused by the control device (44) is the surpassing of a certain oblique position of the vehicle.

5. An hydraulic steering-braking system for vehicles, especially tractors for use in agriculture, comprising
– brake cylinder arrangements (24, 36 ; 30, 38), one at each side of the vehicle,
– a master cylinder arrangement (14),
– a valve arrangement (22, 28, 34) for connecting the master cylinder arrangement (14) to the brake cylinder arrangements (24, 36 ; 30, 38) at both sides of the vehicle in a normal condition and for selectively disconnecting the brake cylinder arrangement (24, 36 or 30, 38) at either side of the vehicle from the master cylinder arrangement (14) in preselectable blocking conditions, and
– a control device (44) which causes the valve arrangement (22, 28, 34) to return to the normal condition when a predetermined condition has been established,
characterized in that
– an input of the control device (44) is connected to a circuit (54) which determines the turning of a vehicle steering gear to be actuated by the driver by means of a steering wheel, and
– a sufficient condition for return of the valve arrangement (22, 28, 34) into the normal condition caused by the control device (44) is the failure of a certain turning being reached at the onset of a braking operation.

6. An hydraulic steering-braking system for vehicles, especially tractors for use in agriculture, comprising
– brake cylinder arrangements (24, 36 ; 30, 38), one at each side of the vehicle,
– a master cylinder arrangement (14),
– a valve arrangement (22, 28, 34) for connecting the master cylinder arrangement (14) to the brake cylinder arrangements (24, 36 ; 30, 38) at both sides of the vehicle in a normal condition and for selectively disconnecting the brake cylinder arrangement (24, 35 or 30, 38) at either side of the vehicle from the master cylinder arrangement (14) in preselectable blocking conditions, and
– a control device (44) which causes the valve arrangement (22, 28, 34) to return to the normal condition when a predetermined condition has been established,

characterized in that
– an input of the control device (44) is connected to a switch (56) which monitors the coupling engagement of a trailer vehicle, and
– a sufficient condition for return of the valve arrangement (22, 28, 34) into the normal condition caused by the control device (44) is the coupling of a trailer vehicle.

7. The steering-braking system as claimed in one of claims 1 to 6, characterized in that an electromagnetic valve (22 ; 28) each is arranged at each side of the vehicle between a chamber (16) of the master cylinder arrangement (14) and a rear wheel brake cylinder (24 ; 30) each, said valve being open in the normal condition and adapted to be closed by a signal from the control device (44).

8. The steering-braking system as claimed in claim 7, characterized in that a common electromagnetic valve (34) is arranged between a second chamber (18) of the master cylinder arrangement (14) and front wheel brake cylinders (36 ; 38) at both sides of the vehicle, said valve being open in the normal condition and adapted to be closed by a signal which is emitted by the control device (44) together with each signal destined for one or the other of the two electromagnetic valves (22 ; 28) associated with the rear wheel brake cylinders (24 ; 30).

## Revendications

1. Installation hydraulique de freinage de direction pour véhicules, en particulier des tracteurs agricoles, comportant
– un dispositif de cylindres de frein (24, 36 ; 30, 38) de chaque côté du véhicule,
– un dispositif de maître-cylindre (14),
– un dispositif de valves (22, 28, 34) qui, le dispositif de cylindre principal (14) étant dans un état normal, relie le dispositif de maître-cylindre aux dispositifs de cylindres de frein (24, 36 ; 30, 38) situés des deux côtés du véhicule, mais qui cependant, dans des états de fermeture susceptibles d'être présélectionnés, sépare au choix le dispositif de cylindres de frein (24, 36 ou 30, 38) situé de l'un ou de l'autre côté du véhicule, du dispositif de maîtrecylindre (14), et
– un appareil de commande (44) qui fait revenir le dispositif de valves (22, 28, 34) à son état normal, dés qu'une condition prédéterminée est remplie, caractèrisée par le fait qu'
– une entrée de l'appareil de commande (44) est raccordée à un compteur de vitesse (46)
– et qu'une condition suffisante pour le retour à l'état normal du dispositif de valves (22, 28, 34), provoqué par l'appareil de commande (44), est le fait qu'une vitesse prédéterminée du véhicule est atteinte.

2. Installation hydraulique de freinage de direction destinée à des véhicules, en particulier à des tracteurs agricoles, comportant

– un dispositif de cylindres de frein (24, 36 ; 30, 38) situé de chacun des deux côtés du véhicule,

– un dispositif de maître-cylindre (14),

– un dispositif de valves (22, 28, 34) qui relie, à l'état normal, le dispositif de maître-cylindre (14) aux dispositifs de cylindre de freins (24, 36 ; 30, 38) situés de chacun des deux côtés du véhicule, mais qui, dans des états de fermetures susceptibles d'être présélectionnée, sépare le dispositif de cylindres de frein (24, 36 ou 30, 38) au choix soit d'un côté ou soit de l'autre côté du véhicule, du dispositif de cylindre principal (14),

– et un appareil de commande (44) qui fait revenir le dispositif de valves (22, 28, 34) à son état normal dés qu'une condition prédéterminée est remplie, caractérisée par le fait qu'

– une entrèe de l'appareil de commande (44) est raccordée à un dispositif de décompte de temps (48)

– et qu'une condition suffisante pour que le retour à l'état normal du dispositif de valves (22, 28, 34) provoqué par le dispositif de commande (44) est le fait qu'un temps prédéterminé s'est écoulé après la présélection d'un des états de fermeture.

3. Installation hydraulique de freinage de direction destinée à des véhicules, en particulier à des tracteurs agricoles, comportant

– un dispositif de cylindres de frein (24, 36 ; 30, 38) sur chacun des deux côtés du véhicule,

– un dispositif de maître-cylindre (14),

– un dispositif de valves (22, 28, 34) qui, à l'état normal, relie le dispositif de maître-cylindre (14) aux dispositifs de cylindres de frein (24, 36 ; 30, 38) situés de chacun des deux côtés du véhicule, mais qui cependant, dans des états de fermeture susceptibles d'être présélectionnée, sépare le dispositif de cylindres de frein (24, 36 ou 30, 38) au choix soit de l'un ou de l'autre côté du véhicule, du dispositif de cylindre principal (14)

– et un dispositif de commande (44) qui fait revenir à son état normal le dispositif de valves (22, 28, 34), dès qu'une condition prédéterminée est remplie, caractérisée par le fait qu'

– une entrée de l'appareil de commande (44) est raccordée à un circuit qui surveille une boite de vitesses du véhicule

– et qu'une condition suffisante pour le retour à l'état normal du dispositif de valves (22, 28, 34) provoqué par l'appareil de commande (44), consiste dans le fait qu'un rapport de la boîte de vitesses supérieur à un rapport déterminé, est en service.

4. Installation hydraulique de freinage de direction destinée à des véhicules, en particulier des tracteurs agricoles, comportant

– un dispositif de cylindres de freinage (24, 36 ; 30, 38) sur chacun des deux côtés du véhicule,

– un dispositif de maître-cylindre (14),

– un dispositif de valves (22, 28, 34) qui, à l'état normal, relie le dispositif de maître-cylindre aux dispositifs de cylindres de freinage (24, 36 ; 30, 38) situés de chacun des deux côtés du véhicule, mais qui cependant, dans des états de fermeture susceptibles d'être présélectionnés, sépare le dispositif de cylindres de freinage 24, 36 ou 30, 38) au choix d'un côté ou de l'autre du véhicule, du dispositif de maître-cylindre (14),

– et un dispositif de commande (44) qui fait revenir à l'état normal le dispositif de valves (22, 28, 34) dès qu'une condition prédéterminée est remplie, caractérisée par le fait qu'

– une entrée du dispositif de commande (44) est raccordée à un dispositif de mesure d'inclinaison transversale (52) monté sur le véhicule,

– et qu'une condition suffisante pour le retour à l'état normal du dispositif de valves (22, 28, 34) provoqué par le dispositif de commande (44), est le dépassement d'une position inclinée déterminée du véhicule.

5. Installation hydraulique de freinage de direction destinée à des véhicules, en particulier à des tracteurs agricoles, comportant

– un dispositif de cylindres de frein (24, 36 ; 30, 38) sur chacun des deux côtés du véhicule,

– un dispositif de maître-cylindre (14),

– un dispositif de valves (22, 28, 34) qui, à l'état normal, relie le dispositif de maître-cylindre (14) aux dispositifs de cylindres de freinage (24, 36 ; 30, 38) situés sur chacun des deux côtés du véhicule, mais qui, dans des états de fermeture susceptibles d'être présélectionnés, sépare le dispositif de cylindres de frein (24, 36 ou 30, 38) au choix soit de l'un soit de l'autre côté du véhicule, du dispositif de maître-cylindre (14),

– et un dispositif de commande (44) qui fait revenir à l'état normal le dispositif de valves (22, 28, 34) dès qu'une condition prédéterminée est remplie, caractérisée par le fait qu'

– une entrée de l'appareil de commande (44) est raccordée à un circuit (54) destiné à constater le braquage d'une direction de véhicule devant être actionnée par le conducteur au moyen d'un volant de direction,

– et qu'une condition suffisante pour le retour à l'état normal du dispositif de valves (22, 28, 34) provoqué par l'appareil de commande (44) est le fait qu'un braquage déterminé de la direction du véhicule n'est pas atteint au début d'un freinage.

6. Installation hydraulique de freinage de direction destinée à des véhicules, en particulier à des tracteurs agricoles, comportant

– un dispositif de cylindres de frein (24, 36 ; 30, 38) sur chacun des deux côtés du véhicule,

– un dispositif de maître-cylindre (14),

– un dispositif de valves (22, 28, 34) qui, à l'état normal, relie le dispositif de maître-cylindre (14) aux dispositifs de cylindres de freinage (24, 36 ; 30, 38) situés sur chacun des deux côtés du véhicule, mais qui, dans des états de fermeture susceptibles d'être présélectionnés, sépare le dispositif de cylindres de frein (24, 36 ou 30, 38) au choix soit de l'un soit de l'autre côté du véhicule, du dispositif de maître-cylindre (14),

– et un dispositif de commande (44) qui fait revenir à l'état normal le dispositif de valves (22, 28, 34) dès qu'une condition prédéterminée est remplie, caractérisée par le fait qu'

– une entrée de l'appareil de commande (44) est raccordée à un interrupteur (56) qui surveille l'attelage d'un véhicule remorqué,

– et qu'une condition suffisante pour le retour à l'état normal du dispositif de valves (22, 28, 34) est le fait qu'un véhicule remorqué est attelé.

7. Installation hydraulique de freinage de direction selon l'une des revendications 1 à 6, caractérisée par le fait qu'entre une chambre (16) du dispositif de maître-cylindre (14) et chacun des cylindres de frein de roues arrière (24 ; 30) placée chacun d'un côté du véhicule, est disposée une valve électromagnétique (22 ; 28) qui, à l'état normal est ouverte, et qui peut être fermée au moyen d'un signal issu de l'appareil de commande (44).

8. Installation hydraulique de freinage de direction selon la revendication 7, caractérisée par le fait qu'entre une deuxième chambre (18) du dispositif de maître-cylindre (14) et les cylindres de frein de roues avant (36 ; 38) situés de chaque côtè du véhicule est disposée une valve électromagnétique commune (34) qui est ouverte à l'état normal et qui peut être fermée par un signal qui est délivré par l'appareil de commande (44) en même temps que chaque signal qui est destiné à l'une ou à l'autre des deux valves électromagnétiques (22, 28) affectées aux cylindres de frein des roues arrière (24 ; 30).